# EUROPÄISCHE PATENTANMELDUNG

(11) **EP 3 800 363 A1**
(43) Veröffentlichungstag der Anmeldung: **07.04.2021**
(21) Anmeldenummer: 20210046.7
(22) Anmeldetag: 18.07.2018
(51) Int. Cl.: F16C 29/00, F16C 29/04, A47B 88/493

(54) **SCHUBLADENAUSZIEHFÜHRUNG**

(30) Priorität: 30.08.2017 AT 507232017
(62) Teilanmeldung aus: 18749284.8
(71) Anmelder: Julius Blum GmbH, 6973 Höchst (AT)
(72) Erfinder: MEUSBURGER, Marc, 6863 Egg (AT); MUSIC, Elvis, 88131 Lindau (DE); NETZER, Emanuel, 6973 Höchst (AT); GASSER, Ingo, 6973 Höchst (AT)
(74) Vertreter: Torggler & Hofinger Patentanwälte

(57) **Zusammenfassung**

Schubladenausziehführung (4), umfassend,
- eine erste Führungsschiene (9) und wenigstens eine zweite Führungsschiene (10), welche relativ zueinander verschiebbar gelagert sind,
- wenigstens einen Laufwagen (22) mit lastübertragenden Wälzkörpern (24, 25, 26), wobei der wenigstens eine Laufwagen (22) zwischen der ersten Führungsschiene (9) und der wenigstens einen zweiten Führungsschiene (10) verschiebbar gelagert ist, wobei der wenigstens eine Laufwagen (22) zumindest drei Wälzkörper (24, 25, 26) aufweist, welche jeweils eine zylindrische Form aufweisen und welche in einer Montagelage der Schubladenausziehführung (4) jeweils um eine horizontal verlaufende Achse drehbar gelagert sind,
wobei die zumindest drei Wälzkörper (24, 25, 26) des Laufwagens (22) in der Montagelage der Schubladenausziehführung (4) in zumindest drei übereinanderliegenden Laufebenen (A, B, C) angeordnet sind.

## Beschreibung

Die vorliegende Erfindung bezieht sich auf eine Schubladenausziehführung, umfassend:
- eine erste Führungsschiene und wenigstens eine zweite Führungsschiene, welche relativ zueinander verschiebbar gelagert sind,
- wenigstens einen Laufwagen mit lastübertragenden Wälzkörpern, wobei der wenigstens eine Laufwagen zwischen der ersten Führungsschiene und der wenigstens einen zweiten Führungsschiene verschiebbar gelagert ist, wobei der wenigstens eine Laufwagen zumindest drei Wälzkörper aufweist, welche jeweils eine zylindrische Form aufweisen und welche in einer Montagelage der Schubladenausziehführung jeweils um eine horizontal verlaufende Achse drehbar gelagert sind.

Bei Schubladenausziehführungen werden zur Lastübertragung der Schublade Laufwagen eingesetzt, welche eine reibungsarme und eine präzise Translation der Führungsschienen zueinander ermöglichen. Diese Laufwagen (oder Laufwagenkäfige) weisen Wälzkörper (beispielsweise in Form von Zylindern, Kugeln oder Kegeln) auf, welche an vorgesehenen Laufstegen der Führungsschienen verfahrbar sind, sodass die Führungsschienen relativ zueinander gleitend abstützbar sind.

In der WO 2007/108601 A1 und in der DE 31 27 701 A1 sind nichtgattungsgemäße Schubladenausziehführungen offenbart, wobei die lastübertragenden Wälzkörper als Kugeln ausgebildet sind, welche in einem gemeinsamen Laufwagen gelagert sind. Diese Kugelführungen weisen die Nachteile auf, dass die Nutzungsbreite der Kugeln aufgrund ihrer sphärischen Oberfläche nur zu etwa 70% genützt wird, d.h. etwa 30% der Kugelbreite verschwenden Bauraum und erhöhen das Gewicht. Außerdem ist die Kontaktfläche zu den Schienenprofilen lediglich "punktförmig" ausgebildet, wobei dieser Punktkontakt neben einer geringen Abstützfläche auch zu einer hohen Flächenpressung und damit zu unerwünschten Deformationen der Kugeln führt.

In der DE 296 19 413 U1 und in der DE 43 37 485 A1 sind Ausziehführungen für Schubladen gezeigt, wobei zylindrische Laufrollen mit horizontaler Drehachse in zwei übereinander angeordneten Laufebenen angeordnet sind. Zusätzlich dazu sind seitliche Ausgleichsrollen mit vertikaler Drehachse vorgesehen, durch welche die Ausziehschiene relativ zur Korpusschiene in seitlicher Richtung führbar ist. Die lastübertragenden Laufrollen und die seitlichen Ausgleichsrollen sind in einem gemeinsamen Laufwagen gelagert.

In der WO 2017/106889 A1 ist eine Schubladenausziehführung mit einer Korpusschiene, einer Mittelschiene und mit einer Ladenschiene gezeigt, wobei zwischen diesen Schienen jeweils verschiebbar angeordnete Laufwagen mit lastübertragenden Wälzkörpern angeordnet sind.

Aufgabe der vorliegenden Erfindung ist es, eine Schubladenausziehführung der eingangs erwähnten Gattung mit einer stabilen und kompakten Ausführung des Laufwagens anzugeben.

Dies wird erfindungsgemäß durch die Merkmale des Patentanspruchs 1 gelöst. Weitere Ausführungsbeispiele der Erfindung sind in den abhängigen Ansprüchen angegeben.

Gemäß der Erfindung ist demnach vorgesehen, dass die zumindest drei Wälzkörper des Laufwagens in der Montagelage der Schubladenausziehführung in zumindest drei übereinanderliegenden Laufebenen angeordnet sind.

Somit weist der Laufwagen zumindest drei Wälzkörper oder zumindest drei Wälzkörpergruppen auf, deren Drehachsen jeweils in voneinander gesonderten Laufebenen und in Montagelage der Schubladenausziehführung an einem Möbelkorpus in Höhenrichtung voneinander beabstandet sind.

Dies stellt angesichts der eingangs erwähnten WO 2007/108601 A1 und der DE 31 27 701 A1 auch keine naheliegende Maßnahme dar, weil die dort gezeigten Schubladenausziehführungen samt Laufwagen für den Einsatz mit zylindrischen Rollen mit horizontal verlaufenden Drehachsen erheblich modifiziert werden müssten.

Neben einer stabilen und kompakten Bauweise kann dabei die Gefahr von Abplattungen der Wälzkörper reduziert werden, weil die auftretenden Kräfte durch die Anordnung von zumindest drei Wälzkörpern in verschiedenen Laufebenen auf einen größeren Bereich verteilt werden und damit jeder einzelne Wälzkörper lediglich reduzierten Belastungen ausgesetzt ist. Ein weiterer Vorteil der Erfindung liegt darin, dass - insbesondere bei beengten Platzverhältnissen innerhalb des Schienenprofils der Führungsschienen, beispielsweise durch einen umgebogenen Falz einer Führungsschiene - ein stabiler Verbund eines Wälzkörpers einer Laufebene mit den anderen Wälzkörpern der anderen Laufebenen herbeigeführt wird.

Gemäß einem Ausführungsbeispiel kann vorgesehen sein, dass die zumindest drei Wälzkörper - in einer Draufsicht auf eine rechtwinklig zu einer Längserstreckung der Führungsschienen verlaufenden Ebene - seitlich versetzt zueinander angeordnet sind. Durch eine solche Dreipunktabstützung ist es möglich, dass seitliche Kippmomente, die aufgrund einer Belastung der Schublade auf die Führungsschienen ausgeübt werden, über die zueinander seitlich versetzten Wälzkörper übertragen und damit verbessert aufgefangen werden.

Bei möglichen Ausführungsformen der Erfindung kann vorgesehen sein,
- dass ein erster Wälzkörper der zumindest drei Wälzkörper - in einer Draufsicht auf eine rechtwinklig zu einer Längsrichtung der Führungsschienen verlaufenden Ebene - eine tiefste Lage relativ zu einem zweiten Wälzkörper und zu einem dritten Wälzkörper einnimmt, wobei der zweite Wälzkörper und der dritte Wälzkörper vollständig oberhalb des ersten Wälzkörpers angeordnet sind, und/oder
- dass zumindest zwei der zumindest drei Wälzkörper - in einer Draufsicht auf eine rechtwinklig zu einer Längsrichtung der Führungsschienen verlaufenden Ebene - relativ zueinander nur teilweise übereinander angeordnet sind, und/oder
- dass die zumindest drei Wälzkörper in einer entlang einer Längsrichtung der Führungsschienen verlaufenden Richtung voneinander beabstandet sind.

Weitere Einzelheiten und Vorteile der vorliegenden Erfindung werden anhand der nachfolgenden Figurenbeschreibung erläutert. Dabei zeigt bzw. zeigen:
- Fig. 1: eine perspektivische Darstellung eines Möbels mit Schubladen, welche durch Schubladenausziehführungen relativ zu einem Möbelkorpus verfahrbar gelagert sind,
- Fig. 2: eine Schubladenausziehführung, welche mit einer Schubladenseitenwand zu verbinden ist,
- Fig. 3: die am Möbelkorpus zu befestigende erste Führungsschiene mit zwei voneinander gesonderten Laufwagen in einer perspektivischen Ansicht,
- Fig. 4a, 4b: ein Laufwagen mit einer Verzahnung und ein Käfig des Laufwagens in perspektivischen Darstellungen,
- Fig. 5a, 5b: Querschnitte der Führungsschienen mit den Wälzkörpern in zwei verschiedenen Ausführungsbeispielen.

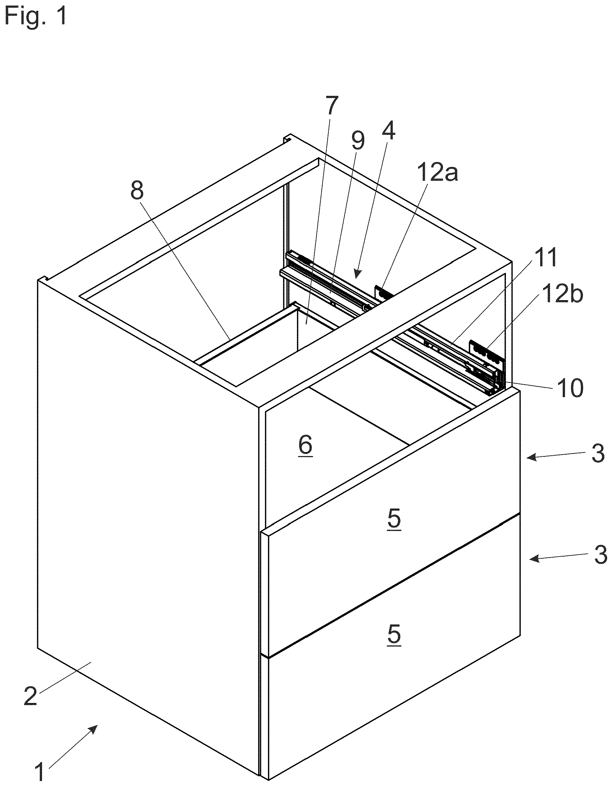

Fig. 1 zeigt ein Möbel 1 mit einem schrankförmigen Möbelkorpus 2, wobei Schubladen 3 über Schubladenausziehführungen 4 relativ zum Möbelkorpus 2 verfahrbar gelagert sind. Die Schubladen 3 weisen jeweils eine Frontblende 5, einen Schubladenboden 6, Schubladenseitenwände 7 und eine Rückwand 8 auf. Die Schubladenausziehführungen 4 umfassen jeweils eine erste Führungsschiene 9, welche über Befestigungsabschnitte 12a, 12b am Möbelkorpus 2 zu befestigen ist, und zumindest eine zweite Führungsschiene 10, welche relativ zur ersten Führungsschiene 9 verfahrbar gelagert ist. Im gezeigten Ausführungsbeispiel ist noch eine dritte, an der Schublade 3 zu befestigende Führungsschiene 11 vorhanden, wobei die zweite Führungsschiene 10 in der Funktion einer auszugsverlängernden Mittelschiene zwischen der ortsfesten ersten Führungsschiene 9 und der dritten Führungsschiene 11 verschiebbar ist.

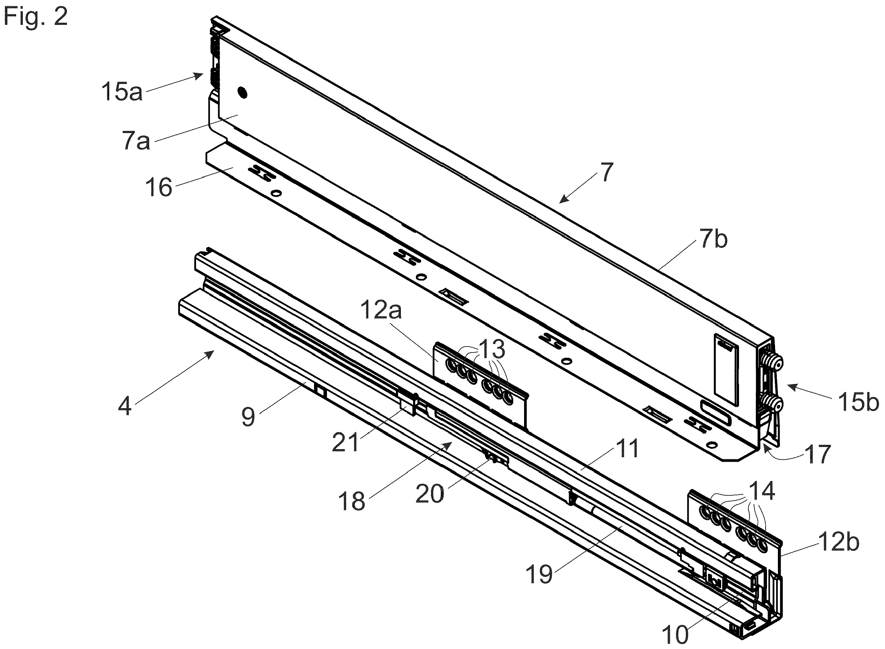

Fig. 2 zeigt eine Anordnung mit einer Schubladenausziehführung 4 und mit einer Schubladenseitenwand 7 in einer perspektivischen Ansicht. Die Befestigungsabschnitte 12a, 12b der ersten Führungsschiene 9 weisen jeweils eine oder mehrere Befestigungsstellen 13, 14 zur Befestigung am Möbelkorpus 2 auf. Die dritte Führungsschiene 11 ist mit der Schubladenseitenwand 7 verbunden oder lösbar verbindbar, wobei die zweite Führungsschiene 10 zwischen der ersten Führungsschiene 9 und der dritten Führungsschiene 11 verfahrbar ist. An der dritten Führungsschiene 9 ist ein Koppelelement 21 angeordnet, welches mit einem Mitnehmer 20 einer Einzugsvorrichtung 18 lösbar koppelbar ist, sodass die dritte Führungsschiene 11 gegen Ende der Schließbewegung vom Mitnehmer 20 erfasst und durch einen Kraftspeicher der Einzugsvorrichtung 18 in eine geschlossene Endlage einziehbar ist. Durch eine Dämpfvorrichtung 19, vorzugsweise mit einer hydraulischen Kolben-ZylinderEinheit, ist diese federunterstützte Einzugsbewegung der dritten Führungsschiene 11 bis hin zur geschlossenen Endlage dämpfbar.

Die Schubladenseitenwand 7 ist als Hohlkammerprofil mit einer inneren Profilwand 7a und einer äußeren Profilwand 7b ausgebildet, wobei die Schubladenseitenwand 7 einen nach unten hin offenen und sich in Längsrichtung der Schubladenseitenwand 7 erstreckenden Kanal 17 ausbildet, in welchem die dritte Führungsschiene 11 der Schubladenausziehführung 4 anordenbar ist. Die Schubladenseitenwand 7 weist ferner eine erste Befestigungsvorrichtung 15a zum Verbinden mit der Rückwand 8, eine zweite Befestigungsvorrichtung 15b zum Verbinden mit der Frontblende 5 sowie eine Auflage 16 zur Abstützung des Schubladenbodens 6 auf.

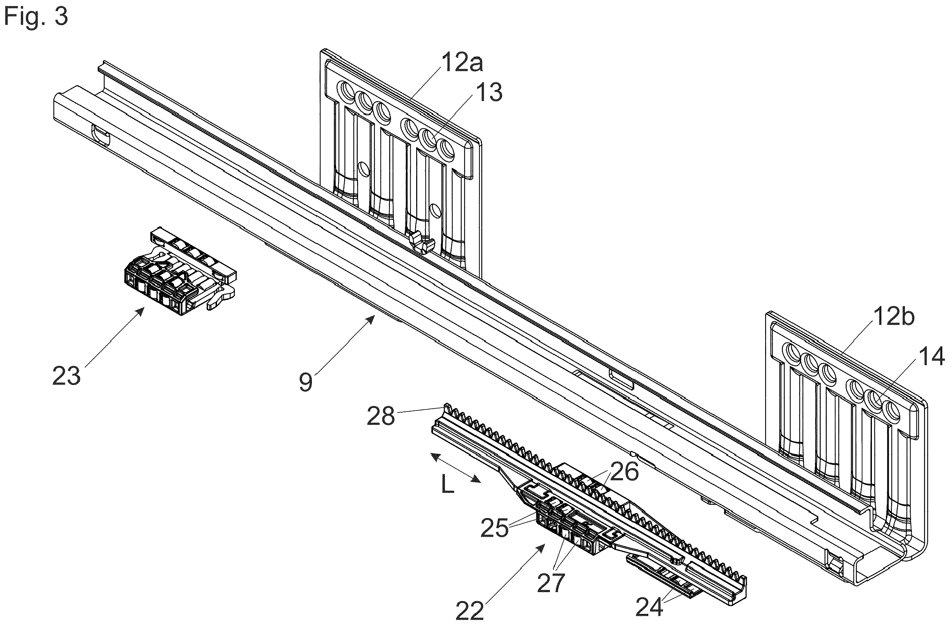

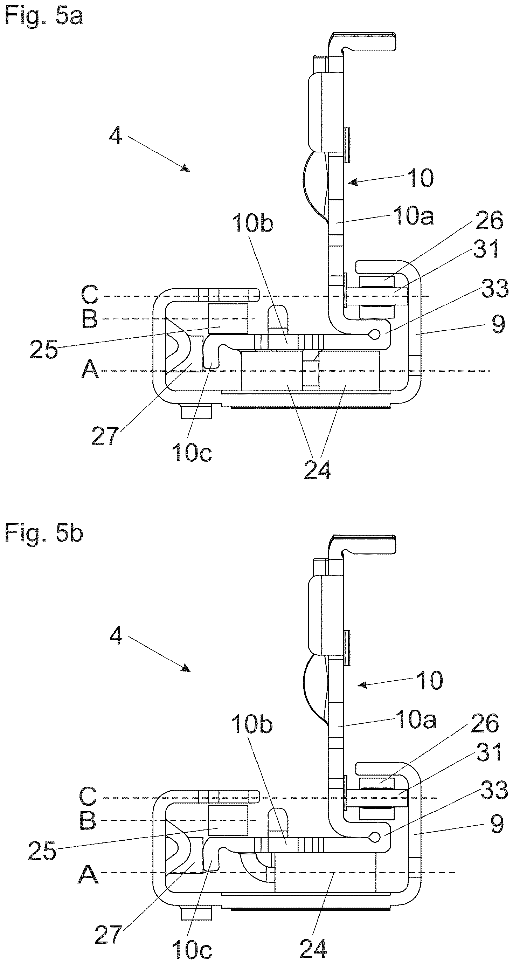

Fig. 3 zeigt die erste Führungsschiene 9 mit den am Möbelkorpus 2 zu montierenden Befestigungsabschnitten 12a, 12b. Die erste Führungsschiene 9 weist im Querschnitt einen U-förmigen oder C-förmigen Abschnitt auf, in welchem ein Laufwagen 22 und ein davon gesonderter weiterer Laufwagen 23 zur Führung und Abstützung der zweiten Führungsschiene 10 verschiebbar gelagert sind. Der Laufwagen 22 weist lastübertragende Wälzkörper 24, 25, 26 auf, deren Drehachsen in Höhenrichtung voneinander beabstandet sind und damit in voneinander gesonderten Laufebenen A, B, C (Fig. 5a, Fig. 5b) angeordnet sind. Der Laufwagen 22 weist ferner auch seitliche Stützrollen 27 mit in Montagelage vertikal verlaufenden Drehachsen auf, wobei die seitlichen Stützrollen 27 einerseits entlang einem in Längsrichtung (L) verlaufenden Vertikalsteg der ersten Führungsschiene 9 und andererseits an einem vertikal verlaufenden Steg 10c (Fig. 5a, Fig. 5b) der zweiten Führungsschiene 10 verfahrbar sind. Durch eine am Laufwagen 22 angeordnete oder ausgebildete Verzahnung 28 kann eine Bewegung des Laufwagens 22 über ein Zahnrad mit einer Bewegung eines weiteren Laufwagens synchronisiert werden, welcher zwischen der zweiten Führungsschiene 10 und der dritten Führungsschiene 11 verschiebbar gelagert ist.

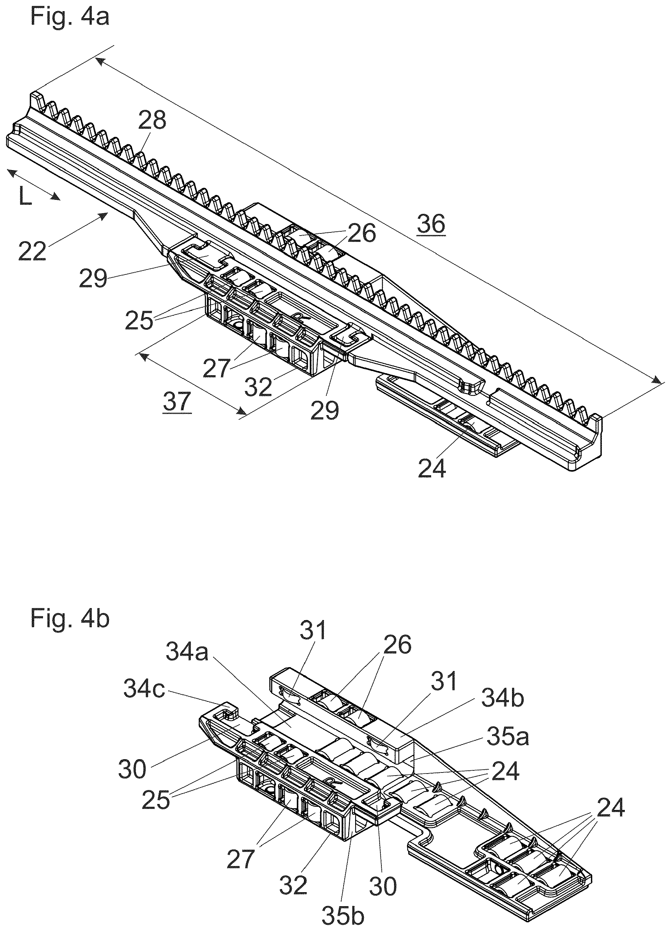

Fig. 4a zeigt den Laufwagen 22 in einer perspektivischen Ansicht. Der Laufwagen 22 umfasst einen Käfig 32, in welchem die Wälzkörper 24, 25, 26 und die seitlichen Stützrollen 27, 31 relativ zum Käfig 32 in einer in Längsrichtung (L) des Laufwagens 22 verlaufenden Richtung ortsfest gelagert sind. Die Verzahnung 28 kann zusammen mit dem Käfig 32 einstückig ausgebildet sein, oder - wie in der Figur gezeigt - am Käfig 32 lösbar befestigt sein. Hierfür weist die Verzahnung 28 in Längsrichtung (L) voneinander beabstandete Laschen 29 auf, welche in Montagelage der Verzahnung 28 in korrespondierenden Ausnehmungen 30 (Fig. 4b) des Käfigs 32 formschlüssig eingreifen. Die in verschiedenen Laufebenen A, B, C angeordneten Wälzkörper 24, 25, 26 sind jeweils um eine horizontal verlaufende Achse drehbar gelagert.

Fig. 4b zeigt den Käfig 32 des Laufwagens 22, wobei die Ausnehmungen 30 zur lösbaren Aufnahme der Laschen 29 der Verzahnung 28 gut erkennbar sind. Die ersten Wälzkörper 24 sind in einer ersten Laufebene A, die zweiten Wälzkörper 25 in einer zweiten Laufebene B und die dritten Wälzkörper 26 in einer dritten Laufebene C angeordnet, wobei die erste, zweite und dritte Laufebene A, B, C in Montagelage der Schubladenausziehführung 4 am Möbelkorpus 2 in Höhenrichtung voneinander beabstandet sind. Die Wälzkörper 24, 25, 26 können in einer entlang einer Längsrichtung (L) verlaufenden Richtung voneinander beabstandet sein. Alle Wälzkörper 24, 25, 26, weisen eine zylindrische Form auf. Darüber hinaus ist es möglich, dass die Wälzkörper 24, 25, 26 jeweils einen unterschiedlichen Durchmesser aufweisen. Dabei kann vorgesehen sein, dass jene Wälzkörper 24 der zumindest drei Wälzkörper 24, 25, 26, welche an einem vorderen Ende des Laufwagens 22 gelagert sind, einen geringeren Durchmesser als die anderen Wälzkörper 25, 26 aufweisen.

Gemäß einem Ausführungsbeispiel kann vorgesehen sein, dass der wenigstens eine Laufwagen 22 drei in der Montagelage im Wesentlichen horizontal ausgerichtete Stege 34a, 34b, 34c aufweist, an welchen jeweils einer der zumindest drei Wälzkörper 24, 25, 26 gelagert ist, wobei vorzugsweise vorgesehen ist, dass die Wälzkörper 24, 25, 26 durch die Stege 34a, 34b, 34c hindurchgeführt sind. In der gezeigten Figur sind die Stege 34a, 34b, 34c über zwei in der Montagelage im Wesentlichen vertikal ausgerichtete Verbindungsstege 35a, 35b miteinander verbunden, wobei vorzugsweise vorgesehen ist, dass zumindest einer der Verbindungsstege 35a, 35b wenigstens eine seitliche Stützrolle 31 aufweist, welche besonders bevorzugt durch diesen Verbindungssteg 35a, 35b hindurchgeführt ist.

Einer der in Montagelage im Wesentlichen horizontal ausgerichteten Stege 34a, 34b, 34c kann sich im Wesentlichen über die gesamte Breite zumindest einer der Führungsschienen 9, 10 erstrecken, wobei vorzugsweise vorgesehen ist, dass dieser Steg 34a eine tiefste Lage relativ zu den beiden anderen Stegen 34b, 34c einnimmt. Einer der in Montagelage im Wesentlichen horizontal ausgerichteten Stege 34a, 34b, 34c kann im Wesentlichen doppelt so breit als zumindest einer der beiden anderen Stege 34b, 34c ausgebildet sein.

Der wenigstens eine Laufwagen 22 kann in einem Querschnitt im Wesentlichen U-förmig oder im Wesentlichen C-förmig ausgebildet sein.

Wie aus Fig. 4a hervorgeht, kann der wenigstens eine Laufwagen 22 eine Länge 36 aufweisen, wobei sich der Bereich 37, in welchem die zumindest drei übereinanderliegenden Wälzkörper 24, 25, 26 angeordnet sind, nur über einen Teil der Länge 36 des wenigstens einen Laufwagens 22 erstreckt.

Fig. 5a zeigt die erste Führungsschiene 9 und die relativ dazu verschiebbare zweite Führungsschiene 10 der Schubladenausziehführung 4 in einem Querschnitt, wobei der Käfig 32 des Laufwagens 22 aus Gründen der verbesserten Übersicht ausgeblendet ist. Die zweite Führungsschiene 10 weist einen, vorzugsweise vertikalen, Seitensteg 10a und einen mit dem Seitensteg 10a über einen Falz 33 verbundenen, vorzugsweise horizontalen, Quersteg 10b auf. Die ersten Wälzkörper 24 sind in Längsrichtung (L) entlang einem Laufsteg der ersten Führungsschiene 9 verfahrbar, während die zweiten Wälzkörper 25 entlang des Quersteges 10b und die dritten Wälzkörper 26 entlang des Falzes 33 der zweiten Führungsschiene 10 abrollbar sind. Im gezeigten Ausführungsbeispiel ist zumindest ein erster Wälzkörper 24 und zumindest ein dritter Wälzkörper 26 in voneinander gesonderten Laufebenen A, C entlang des Falzes 33 verfahrbar gelagert. Zu erkennen ist eine seitliche Stützrolle 31 des Laufwagens 22, welche eine vertikal verlaufende Drehachse aufweist und welche zwischen der ersten Führungsschiene 9 und dem vertikal verlaufenden Seitensteg 10a der zweiten Führungsschiene 10 abrollt. Die Wälzkörper 24, 25, 26 sind jeweils um eine in Montagelage horizontal verlaufende Achse drehbar gelagert, wobei die Achsen der Wälzkörper 24, 25, 26 jeweils in drei übereinanderliegenden Laufebenen A, B, C angeordnet sind.

Eine verbesserte Abstützung zur Kompensation von seitlichen Kippmomenten ergibt sich dann, wenn die Wälzkörper 24, 25, 26 - in einer Draufsicht auf eine rechtwinklig zu einer Längsrichtung (L) der Führungsschienen 9, 10 verlaufenden Ebene (also in einer Draufsicht auf eine Ebene normal zur Längsrichtung (L) - seitlich versetzt zueinander angeordnet sind. Überdies kann vorgesehen sein, dass der erste Wälzkörper 24 der zumindest drei Wälzkörper 24, 25, 26 - in einer Draufsicht auf eine rechtwinklig zu einer Längsrichtung (L) der Führungsschienen 9, 10 verlaufenden Ebene - eine tiefste Lage relativ zu einem zweiten Wälzkörper 25 und zu einem dritten Wälzkörper 26 einnimmt, wobei der zweite Wälzkörper 25 und der dritte Wälzkörper 26 vollständig oberhalb des ersten Wälzkörpers 24 angeordnet sind. In der Figur ist außerdem gezeigt, dass zumindest zwei Wälzkörper 25, 26 der zumindest drei Wälzkörper 24, 25, 26 - in einer Draufsicht auf eine rechtwinklig zu einer Längsrichtung (L) der Führungsschienen 9, 10 verlaufenden Ebene - relativ zueinander nur teilweise übereinander angeordnet sind. Der Quersteg 10b der zweiten Führungsschiene 10 ist mit einem vertikal verlaufenden Steg 10c verbunden, wobei die seitlichen Stützrollen 27 mit vertikaler Drehachse zwischen der ersten Führungsschiene 9 und dem vertikal verlaufenden Steg 10c der zweiten Führungsschiene 10 abrollbar sind.

Fig. 5b zeigt den Querschnitt der Führungsschienen 9, 10 mit einer geringfügig abgewandelten Anordnung der Wälzkörper 24, 25, 26. Anstelle der Wälzkörper 24 gemäß der Fig. 5a, welche seitlich voneinander beabstandet in der gemeinsamen Laufebene A angeordnet sind, ist in Fig. 5b ein einzelner Wälzkörper 24 mit größerer Breite vorgesehen.

Bei allen Ausführungsbeispielen kann vorgesehen sein, dass ein erster Wälzkörper 24 der zumindest drei Wälzkörper 24, 25, 26 zu einer ersten Wälzkörpergruppe, ein zweiter Wälzkörper 25 der zumindest drei Wälzkörper 24, 25, 26 zu einer zweiten Wälzkörpergruppe und ein dritter Wälzkörper 26 der zumindest drei Wälzkörper 24, 25, 26 zu einer dritten Wälzkörpergruppe gehört, wobei die erste, zweite und dritte Wälzkörpergruppe jeweils mehrere Wälzkörper 24, 25, 26 aufweisen, welche in derselben Laufebene A, B, C angeordnet sind. Ferner kann vorgesehen sein, dass die mehreren Wälzkörper 24, 25, 26, welche in derselben Laufebene A, B, C angeordnet sind, in Längsrichtung (L) des Laufwagens 22 voneinander beabstandet und/oder relativ zueinander seitlich versetzt angeordnet sind.

## Patentansprüche

1. Schubladenausziehführung (4), umfassend,
- eine erste Führungsschiene (9) und wenigstens eine zweite Führungsschiene (10), welche relativ zueinander verschiebbar gelagert sind,
- wenigstens einen Laufwagen (22) mit lastübertragenden Wälzkörpern (24, 25, 26), wobei der wenigstens eine Laufwagen (22) zwischen der ersten Führungsschiene (9) und der wenigstens einen zweiten Führungsschiene (10) verschiebbar gelagert ist, wobei der wenigstens eine Laufwagen (22) zumindest drei Wälzkörper (24, 25, 26) aufweist, welche jeweils eine zylindrische Form aufweisen und welche in einer Montagelage der Schubladenausziehführung (4) jeweils um eine horizontal verlaufende Achse drehbar gelagert sind,
**dadurch gekennzeichnet, dass** die zumindest drei Wälzkörper (24, 25, 26) des Laufwagens (22) in der Montagelage der Schubladenausziehführung (4) in zumindest drei übereinanderliegenden Laufebenen (A, B, C) angeordnet sind.

2. Schubladenausziehführung nach Anspruch 1, **dadurch gekennzeichnet, dass** die zumindest drei Wälzkörper (24, 25, 26) - in einer Draufsicht auf eine rechtwinklig zu einer Längsrichtung (L) der Führungsschienen (9, 10) verlaufenden Ebene - seitlich versetzt zueinander angeordnet sind.

3. Schubladenausziehführung nach Anspruch 1 oder 2, **dadurch gekennzeichnet, dass** ein erster Wälzkörper (24) der zumindest drei Wälzkörper (24, 25, 26) - in einer Draufsicht auf eine rechtwinklig zu einer Längsrichtung (L) der Führungsschienen (9, 10) verlaufenden Ebene - eine tiefste Lage relativ zu einem zweiten Wälzkörper (25) und zu einem dritten Wälzkörper (26) einnimmt, wobei der zweite Wälzkörper (25) und der dritte Wälzkörper (26) vollständig oberhalb des ersten Wälzkörpers (24) angeordnet sind.

4. Schubladenausziehführung nach einem der Ansprüche 1 bis 3, **dadurch gekennzeichnet, dass** zumindest zwei der zumindest drei Wälzkörper (24, 25, 26) - in einer Draufsicht auf eine rechtwinklig zu einer Längsrichtung (L) der Führungsschienen (9, 10) verlaufenden Ebene - relativ zueinander nur teilweise übereinander angeordnet sind.

5. Schubladenausziehführung nach einem der Ansprüche 1 bis 4, **dadurch gekennzeichnet, dass** die zumindest drei Wälzkörper (24, 25, 26) in einer entlang einer Längsrichtung (L) der Führungsschienen (9, 10) verlaufenden Richtung voneinander beabstandet sind.

6. Schubladenausziehführung nach einem der Ansprüche 1 bis 5, **dadurch gekennzeichnet, dass** die zumindest drei Wälzkörper (24, 25, 26) jeweils in Bezug auf den wenigstens einen Laufwagen (22) in einer Längsrichtung (L) des Laufwagens (22) ortsfest gelagert sind.

7. Schubladenausziehführung nach einem der Ansprüche 1 bis 6, **dadurch gekennzeichnet, dass** die Achsen der Wälzkörper (24, 25, 26) jeweils in den drei übereinanderliegenden Laufebenen (A, B, C) angeordnet sind.

8. Schubladenausziehführung nach einem der Ansprüche 1 bis 7, **dadurch gekennzeichnet, dass** zumindest zwei, vorzugsweise drei, der zumindest drei Wälzkörper (24, 25, 26) jeweils einen unterschiedlichen Durchmesser aufweisen, vorzugsweise wobei jener Wälzkörper (24) der zumindest drei Wälzkörper (24, 25, 26), welcher an einem vorderen Ende des Laufwagens (22) gelagert ist, einen geringeren Durchmesser als die anderen Wälzkörper (25, 26) aufweist.

9. Schubladenausziehführung nach einem der Ansprüche 1 bis 8, **dadurch gekennzeichnet, dass** ein erster Wälzkörper (24) der zumindest drei Wälzkörper (24, 25, 26) zu einer ersten Wälzkörpergruppe, ein zweiter Wälzkörper (25) der zumindest drei Wälzkörper (24, 25, 26) zu einer zweiten Wälzkörpergruppe und ein dritter Wälzkörper (26) der zumindest drei Wälzkörper (24, 25, 26) zu einer dritten Wälzkörpergruppe gehört, wobei die erste, zweite und dritte Wälzkörpergruppe jeweils mehrere Wälzkörper (24, 25, 26) aufweisen, welche in derselben Laufebene (A, B, C) angeordnet sind.

10. Schubladenausziehführung nach einem der Ansprüche 1 bis 9, **dadurch gekennzeichnet, dass** die Schubladenausziehführung (4) eine dritte, an einer Schublade (3) zu befestigende Führungsschiene (11) aufweist, wobei die erste Führungsschiene (9) an einem Möbelkorpus (2) zu befestigen ist und wobei die zweite Führungsschiene (10) zwischen der ersten Führungsschiene (9) und der dritten Führungsschiene (11) verschiebbar gelagert ist.

11. Schubladenausziehführung nach einem der Ansprüche 1 bis 10, **dadurch gekennzeichnet, dass** eine Führungsschiene (10) einen Seitensteg (10a) und einen mit dem Seitensteg (10a) über einen Falz (33) verbundenen Quersteg (10b) aufweist, wobei zumindest ein Wälzkörper (24, 25) entlang des Quersteges (10b) und zumindest ein weiterer Wälzkörper (26) entlang des Falzes (33) verfahrbar ist.

12. Schubladenausziehführung nach einem der Ansprüche 1 bis 11, **dadurch gekennzeichnet, dass** der wenigstens eine Laufwagen (22) drei in der Montagelage im Wesentlichen horizontal ausgerichtete Stege (34a, 34b, 34c) aufweist, an welchen jeweils einer der zumindest drei Wälzkörper (24, 25, 26) gelagert ist, vorzugsweise wobei die Wälzkörper (24, 25, 26) durch die Stege (34a, 34b, 34c) hindurchgeführt sind.

13. Schubladenausziehführung nach Anspruch 12, **dadurch gekennzeichnet, dass**
- die Stege (34a, 34b, 34c) über zwei in der Montagelage im Wesentlichen vertikal ausgerichtete Verbindungsstege (35a, 35b) miteinander verbunden sind, wobei vorzugsweise vorgesehen ist, dass zumindest einer der Verbindungsstege (35a, 35b) wenigstens eine seitliche Stützrolle (31) aufweist, welche besonders bevorzugt durch diesen Verbindungssteg (35a, 35b) hindurchgeführt ist, und/oder
- sich einer der in Montagelage im Wesentlichen horizontal ausgerichteten Stege (34a, 34b, 34c) im Wesentlichen über die gesamte Breite zumindest einer der Führungsschienen (9, 10) erstreckt, wobei vorzugsweise vorgesehen ist, dass dieser Steg (34a) eine tiefste Lage relativ zu den beiden anderen Stegen (34b, 34c) einnimmt, und/oder
- einer der in Montagelage im Wesentlichen horizontal ausgerichteten Stege (34a, 34b, 34c) im Wesentlichen doppelt so breit als zumindest einer der beiden anderen Stege (34b, 34c) ist.

14. Schubladenausziehführung nach einem der Ansprüche 1 bis 13, **dadurch gekennzeichnet, dass** der wenigstens eine Laufwagen (22) in einem Querschnitt im Wesentlichen U-förmig oder im Wesentlichen C-förmig ausgebildet ist, und/oder der wenigstens eine Laufwagen (22) eine Länge (36) aufweist und sich der Bereich (37), in welchem die zumindest drei übereinanderliegenden Wälzkörper (24, 25, 26) angeordnet sind, nur über einen Teil der Länge (36) des wenigstens einen Laufwagens (22) erstreckt.

15. Schublade (3) mit wenigstens einer Schubladenausziehführung (4) nach einem der Ansprüche 1 bis 14 zum Bewegen einer Schublade (3) relativ zu einem Möbelkorpus (2).
